# EUROPEAN PATENT APPLICATION

(11) **EP 2 674 401 A1**
(43) Date of publication of application: **18.12.2013**
(21) Application number: 12171896.9
(22) Date of filing: 14.06.2012
(51) Int. Cl.: C03C 3/06, C03C 3/091, C03C 25/00, C03C 25/66, F01N 3/021, F01N 3/28, B01D 46/24

(54) **Exhaust gases treatment device and method for making the same**

(71) Applicant: Schott AG, 55122 Mainz (DE)
(72) Inventor: Xue, Junming, 201101 Minhang District (CN); Liebald, Rainer, 64569 Nauheim (DE); Zhang, Guangjun, 200331 Putuo District (CN); Hochrein, Dr. Oliver, 55130 Mainz (DE); Fechner, Dr. Joerg Hinrich, 55118 Mainz (DE); Beier, Wolfram Dr., 55270 Essenheim (DE)

(57) **Abstract**

The invention provides an exhaust gases treatment device with a housing (1) and a catalytic carrier (3) mounted within said housing by a glass fiber structure (2) disposed in a gap between said housing and the carrier. The fiber structure provides a maximum and a minimum holding pressure to the fragile structure depending on the operation temperature of the exhaust gases treatment device.

## Description

The invention refers to a device for the treatment of hot exhaust gases, such as a catalytic converter or a diesel particulate trap that possesses a fragile structure mounted within a housing which is hold therein by a glass fiber structure disposed between the housing and the fragile structure. The glass fiber structure prevents the damage of the fragile structure caused by the thermal expansion and shrinking of the housing and/or the fragile structure during the operation of the exhaust treatment device.

The function of the catalytic converter is to catalyze the oxidation of carbon monoxide and hydrocarbons and the reduction of oxides of nitrogen. The fragile structure containing the catalyst is designed as the carrier to carry out this catalysis reaction. As known, materials used to form this fragile structure are usually brittle ceramics, such as aluminum oxide, silicon dioxide, magnesium oxide, zirconia, cordierite, silicon carbide and the like. Furthermore, plenty of tiny flow channels in the carrier structure make it much more frangible. Any small shockload or stress is sufficient to crack or crush them.

The term "fragile structure" is intended to mean and include structures such as metal and/or ceramic monoliths or the like which may be fragile or frangible in nature, and would benefit from a supporting mat such as is described herein.

To protect this fragile structure from destruction or damage, e.g. a supporting mat is applied into a gap between the fragile structure and a metal housing. The supporting mat is designed as a buffer to reduce the shockloads or any stresses and can be built by a glass fiber structure. Other functions, such as thermal insulation, gas seal and acoustic insulation, might also essentially important to the whole device.

Driven by the requirement to improve the converting efficiency of the converter, bigger amounts of the catalyzer are intentionally employed in the fragile structure. A practical way to increase the catalyzer contained in the carrier is to increase the flow channel numbers by reducing the "channel size diameter" and the wall thickness. For instance, some automotive maker is reducing the wall thickness from 0.15mm to 0.05mm, and increasing the channel numbers from 400mesh to 900mesh, or even higher. However, reducing the wall thickness of the fragile structure will further make the sensitivity of fragile structure increased. To hold the fragile structure tightly enough but also not to break it, the importance of the exact adjustment of the pressure during canning, minimum and maximum holding pressure during working is getting more and more critical.

The aforesaid mounting mat for the fragile structure is formed from glass fibers and therefore in general terms represents a glass fiber structure. The thermal expansion of the mounting mat is dominantly defined by the thermal expansion of the glass fibers used and the structure which is formed using the glass fibers. Commonly glass fibers containing high amounts of silica and providing no or almost minimal thermal expansion are applied for said purposes. In those applications, the mounting performance of the mounting mat is dependent on the holding pressures they provide to the fragile structure. If the holding pressure is too low, vibrations and/or thermal expansion of the housing easily lead to damage of the fragile structure with then only is insufficiently protected by the mounting mat.

Catalytic converters mounted into a metal housing using a heat insulating mounting mat are already known from the prior art. US 5,250,269 uses an melt formed refractory ceramic fiber to produce the mounting mat. The described fiber material is intumescent which means it has a positive thermal expansion and inflates with increasing operation temperature. This approach seems to be promising as the metal housing also expands with increasing temperature and by this way a certain minimum holding pressure to the catalyst can be provided. According to US 5,250,269 minimum holding pressures from 10 kPa corresponding to 0.1 bar are required. A minimum holding pressure of 50 kPa corresponding to 0.5 bar is preferred.

US 7,033,412 B2 discloses catalytic converters mounted into a metal housing using a non-intumescent mounting mat made from leached high silica containing fibers. The mounting mat is intended to secure a minimum holding pressure to the catalyst, which is made from a brittle material and therefore prone to damage by mechanical stress. Again, a minimum holding pressure of 10 kPa corresponding to 0.1 bar is described to be crucial for safely holding the catalyst in the metal housing. The leached fibers could be derived according to a process and a composition contained in US 2010/0298110 A1.

When trying to apply the teaching from the above mentioned references, the inventors of the invention described herein found out that providing a minimum holding pressure to a catalyst made of brittle materials is by far not enough to achieve a secure holding of a catalyst in a metal housing. Specifically, when adopting the teaching from US 7,033,412 B2 many of the referring exhaust treatment devices failed due to damage of the fragile structure of the catalyst although many of the described minimum holding pressure values disclosed were tested.

The current invention therefore deals with the problem to provide a reliable working exhaust treatment device comprising a fragile structure representing the catalyst mounted into a housing of the exhaust treatment device by means of a glass fiber structure, a process for manufacturing such exhaust treatment device and advantageous applications for it.

The inventive solution is summarized in the independent claims. Preferred embodiment can be derived from the independent claims.

The exhaust treatment device according to the invention comprises a housing which can preferably be made of metal, including metal alloys, or at least a material which has a positive thermal expansion. A fragile structure, usually working as carrier for the catalytic medium, shortly called catalyst, is mounted within said housing by a glass fiber structure disposed in a gap between the housing and the fragile structure. The glass fiber structure naturally has a gap bulk density (GBD) and is providing a maximum and a minimum holding pressure to the fragile structure depending on the operation temperature of the exhaust gases treatment device. According to the inventive concept the glass fiber structure exerts a maximum and a minimum holding pressure to the fragile structure in a well defined range, which is expressed by the ratio between the maximum holding pressure and minimum holding pressure which ranges from ≥ 0.1 to ≤ 65 at the operating temperature range of the exhaust gas treatment device from 50°C to 1050 °C, and the maximum holding pressure is ≤ 20 bar.

Both, the GBD of the glass fiber structure before mounting in the housing as well as the GBD after mounting of the glass fiber structure into the housing, are relevant for achieving the holding pressure to the fragile structure during the operation of the exhaust gas treatment device. The described ratio between maximum and minimum holding pressure defines the working range of the glass fiber structure mount in the usual working environment of the exhaust gas treatment device which usually suffers from its wide range of operation temperatures. The described range sets the parameters in the operating temperature range between 50°C and 1050 °C, temperatures which are usually reached in the catalytic devices in automobiles. In this temperature range the different components of the exhaust gas treatment device expand or shrink and therefore add to each other different forces in a very complicated manner. Of course every exhaust gas treatment devices working in other operation temperature ranges are covered by the invention as long as said parameters within the aforesaid operation temperature range are met.

The inventors found out that the reason for the failure of many exhaust gas treatment devices built by applying the prior art is that securing a maximum holding pressure compatible with the fragile structure and reflecting the different thermal expansion and shrinking behavior of the usually used materials is mandatory for a reliably working device. This maximum holding pressure is for all known fragile structures at most 20 bar. The maximum holding pressure will be achieved during the manufacturing or during the operational lifecycle of the exhaust gas treatment device, in which many thermal cycles with heating up and cooling down occurs, not at the maximum operation temperatures, but at the minimum temperatures the device is exposed to.

At this point it has to be noticed that the maximum holding pressure comprises two values, i.e. the peak maximum holding pressure and the residual maximum holding pressure. The peak maximum holding pressure is usually observed during the manufacturing of the exhaust gas treatment device, when the fragile structure of the catalyst is mounted within the housing. During operation, the components expand. Usually the metal housing shows the most thermal expansion and expands more than the catalyst and the glass fiber structure. Therefore the holding pressure decreases. This decrease has to be controlled by providing a minimum holding pressure as mentioned in the prior art. When the operation temperature decreases, the holding pressure again increases to values of the residual maximum holding pressure. The residual maximum holding pressure therefore commonly represents the maximum holding pressure which can be observed during the operation of the device. When using the term maximum holding pressure in the meaning of the current invention we refer to the value which is the highest, because the maximum holding pressure is responsible for the damage of the fragile structure such as the catalyst. For the avoidance of doubt, the term maximum holding pressure and minimum holding pressure always refers to the values occurring in one gas exhaust treatment device during its operation.

When canning the glass fiber structure into the housing, the peak maximum holding pressure and residual maximum holding pressure should be very well controlled in order not to break the fragile structure. In particular, at larger GBD, the difference between peak pressure and residual pressure is significant. Therefore, to avoid any breakage during the canning process, preferred ratios are defined between the peak maximum holding pressure and the residual maximum holding pressure to well control the pressure fluctuation.

For many different applications different types of fragile structures are used. Those may range from catalysts for small energy efficient private use engines or very large particulate withhold system for e.g. ship vessel engines or commercial transportation. According to the invention the maximum holding pressure is at maximum 20 bar.

The maximum holding pressure must not be exceeded in order to secure a safe and durable mount for the fragile structure. Because a high value of the minimum holding pressure is advantageous and desired, the ratio of maximum holding pressure and minimum holding pressure together with the maximum holding pressure automatically reflects the application since a small ratio value also stands for a relative high value for the minimum holding pressure.

By using the aforesaid working range, the invention provides an adjustable ratio between the maximum holding pressure and minimum holding pressure when operating the glass fiber structure in the exhaust gases treatment device. The ratio between the maximum holding pressure and minimum holding pressure ranges from ≥ 0.1 to ≤ 35 at the operating temperature range of the exhaust gas treatment device from 50 °C to 800 °C and ≥ 0.1 to ≤ 25 at the operating temperature range of the exhaust gas treatment device from 50 °C to 400 °C. Of course the maximum holding pressure again is ≤ 20 bar. Other advantageous maximum holding pressures are ≤ 15 bar, ≤ 12 bar, ≤ 10 bar, ≤ 8 bar, ≤ 6 bar, ≤ 5 bar. Advantageous minimum holding pressures are ≥ 0,31 bar and ≥ 0,4 bar and ≥ 0,5 bar ≥ 0,6 bar. All this values can be understood as also being applicable in combination with each other. The advantageous upper limits of the ratio could be calculated from those values, which are hereby disclosed and comprise, without limiting the mathematically possible values, e.g. ≤ 33, ≤ 30, ≤ 25, ≤ 20, ≤ 16, ≤ 15, ≤ 12, ≤ 10.

In most cases, when the canning material has a positive coefficient of thermal expansion, the ratio will be at least 1. However, there might be cases that canning materials with a negative coefficient of thermal expansion are used. Then the ratio will be < 1. This also indicates that for the matters of definition the maximum holding pressure is measured at lower operation temperatures than the minimum holding pressure.

In a preferred embodiment the glass fiber structure is a mat with no or at least almost no thermal expansion. This means the glass fiber structure preferably is a non-intumescent mat. This can be achieved by using non-intumescent glass fibers. Such glass fibers and a process for their production are described later.

Preferably, the glass fiber structure mounted in the housing has a gap bulk density (GBD) of ≥ 0.1 g/cm³ and to ≤ 0.8 g/cm³. The GBD is measured at room temperature at the assembled exhaust gases treatment device. Another advantageous range is ≥ 0.15 g/cm³ and to ≤ 0.55 g/cm³. Controlling the GBD is beneficial to meet the holding pressure requirements.

As described previously, to provide suitable holding pressure during canning the converter, it is meaningful to define ratios relevant to the peak pressure and the residual pressure. When canning the mat in the housing at any given GBD said above, the ratio between the peak pressure to residual pressure is advantageously ≥ 1 and ≤ 5, preferred ≥ 1 and ≤ 4, more preferred ≥ 1 and ≤ 3, most preferred ≥ 1 and ≤ 2.

In a preferred embodiment the glass fiber structure has a ratio between the peak maximum pressure at the maximum gap bulk density to the peak maximum pressure at the minimum gap bulk density of ≥ 0.1 to ≤ 15 and a ratio of the residual maximum pressure at the maximum gap bulk density to the residual maximum pressure at the minimum gap bulk density of ≥ 0.1 to ≤ 15.

The glass fibers in the glass fiber structure comprise according to the invention the following components, all values and composition ranges are in weight% on oxide basis, as long as no other indication is provided: 80% - 96% SiO₂, 3.9% - 19.9 % Al₂O₃, 0.1% - 10% B₂O₃ as mandatory components and 0% - 1 % Li₂O, 0% - 1 % Na₂O, 0% - 1 % K20, 0% - 5% MgO, 0% - 5% CaO, 0% - 5% SrO, 0% - 5% BaO, 0% - 5% P₂O₅, 0% - 5% Fe₂O₃, 0% - 5% ZrO₂, 0 %- 5% F, 0% - 5% ZnO and 0% - 5% TiO₂ as optional components.

This composition provides the advantage that the resulting fibers show low crystallization tendency at high temperatures not lower than 1250 °C, preferably not lower than 1350 °C, most preferably not lower than 1400 °C. Crystallization of the fibers in the glass fiber structure could lead to a breakage of the fibers and could therefore negatively impact the mounting performance of the glass fiber structure, which at the end could lead to a damaged fragile structure and a resulting failure of the exhaust gas treatment device. The superior resistance to crystallization is mainly achieved by the mandatory content of B₂O₃. Even more advantageously, the content of B₂O₃ ranges from at least 3% to 5%.

Due to environmental and health reasons the glass fibers used in the glass fiber structure have a diameter which exceeds or is at least 5 µm. This means that the glass fiber structure is essentially free from fibers having a diameter less than 5 µm.

In a preferred embodiment, the total contents of Al₂O₃ and B₂O₃ in sum ranges from 6.1% to 20%, the contents of SiO₂ and B₂O₃ in sum ranges from 80.1 - 96% and the contents of P₂O₅ and Li₂O and Na₂O and K₂O and MgO and CaO and SrO and BaO and F and Fe₂O₃ and ZrO₂ and TiO₂ in sum exceeds 1.5%.

The invention also provides a process for making the described exhaust gas treatment device with said ratio of holding pressures. Therefore the process includes the process steps providing a housing, providing a fragile structure, providing a glass fiber structure and mounting the fragile structure within the housing by disposing a glass fiber structure within a gap between the housing and the fragile structure. In order to obtain the already described glass fiber structure the basic glass fibers have to be produced. Such high SiO₂ containing fibers cannot be directly drawn. Therefore the process also includes the production of a mother glass by melting a mother glass comprising (in weight% on oxide basis) 55% - 80% SiO₂, 6% - 20% Al₂O₃, 0.1% - 5% B₂O₃, 0% - 40% R₂O and 0% - 5% R, whereas R₂O stands for one or a mixture of any of Li₂O and/or Na₂O and/or K₂O and R stand for one or a mixture of MgO and/or CaO and/or SrO and/or BaO and/or P₂O₅ and/or Fe₂O₃ and/or ZrO₂ and/or F.

In a next step fibers are formed from the mother glass, usually applying conventional fiber drawing techniques. Then the mother glass fibers are treated by acid or basic extraction, the so called leaching process, and are subsequently rinsed, whereby acid and/or basic and/or salt residues are removed. In a preferred step the rinsed fibers are also heat treated, e.g. by drying. Then the final glass fiber structure is formed from the rinsed and/or heat treated fibers. Compared with quartz fiber, the described high silica fiber can be produced with less efforts. Using the leaching process to make high silica glass fibers has been a known technique in the glass fiber industry, which was shown by e.g. Patent US 2,624,658 and US 2,718,461.

The invention is further detailed by the examples and the drawings. As a final product of the acid leaching method of the mother glass fibers, about 90% of SiO₂ content in the glass fibers of the glass fiber structure will be obtained. These fibers possess outstanding properties, such as high temperature resistance, high chemical resistance, and mechanical properties. These properties are originated from the high SiO₂ content and the nature of Si-O bond. Usually, these properties can be remained up to temperature of 1100 °C.

However, it could be observed that those fibers tend to crystallize when they are exposed to temperatures much higher than 1250 °C. This crystallization tendency issue is an unsolved problem for the high silica fibers known from the prior art, and even the quartz fibers. Since the crystallization will bring harm to the product properties, in particular the mechanical property, it would be meaningful to make the products with low crystallization at higher temperatures, in other words, to make it more thermal stable. These crystallization processes may also lead to the formation of harmful dust (e.g. asbestosis) as well as this may lead to shattering of the glass fiber structure and thus may cause destruction of the fragile mounted structure. The invention improves the thermal stability by reducing the crystallization tendency. It was found that B₂O₃ as a glass forming compound strongly decreases the crystallization tendency of such glass fibers.

It is assumed that there are at least two known factors that cause the crystallization. Firstly, silica glass has a same composition, similar building unit and density (2.2 g/cm³ of silica glass, 2.3 g/cm³ of cristobalite) with cristobalite. Thus, the crystallization from silica to cristobalite easily occurs when the glass fibers are treated with or used at high temperatures. Secondly, the specific surface area is very high in silica fibers. High surface energy will also enhance the crystallization. The composition reason said here in the first factor is taken as the main cause for crystallization problem. The present invention provides a boric oxide containing thermal stable high silica glass fiber, which has low crystallization tendency and improved operating temperature.

The Figures provide examples and test data of exhaust gas treatment devices and properties concerning its components derived from examples produced according to the described process.

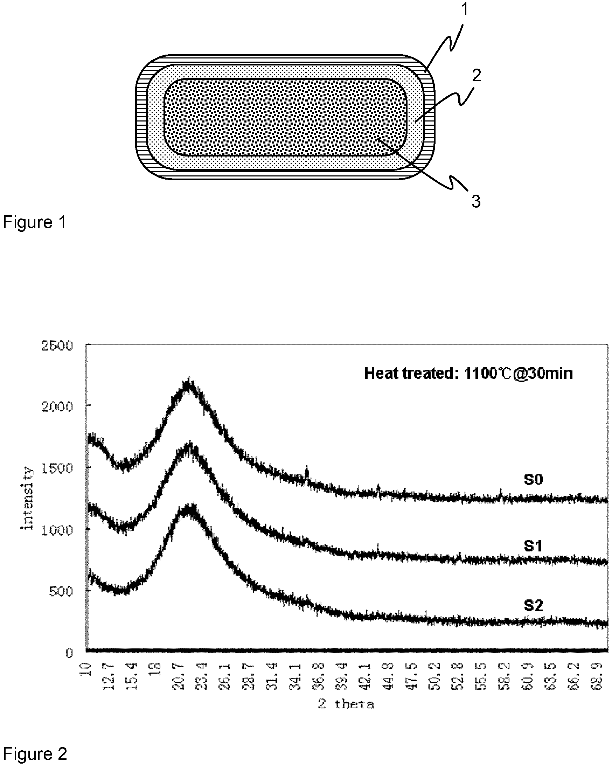

Figure 1 schematically shows the cross section of an example of an exhaust gas treatment device having a fragile structure (3) mounted within a housing (1) that is hold therein by a glass fiber structure (2) formed as supporting mat disposed in a gap between the housing and the fragile structure.

Obviously, the present invention is not intended to be limited to use in the catalytic converter shown in the Figure 1 and so the design in the figure is only as an example to illustrate the invention. The glass fiber structure (2) could be used to mount or support any fragile structure (3) suitable for treating exhaust gases, such as a diesel catalyst structure, a diesel particulate trap or the like. Catalyst structure may include flow channels or cells with number from 200 to about 900mesh, or even higher.

The exhaust gas treatment device may include a generally tubular or rectangular housing (1) which could be made of two metal pieces, for instance, high temperature resistant steel, sealed together by a flange (not shown). Alternatively, the housing may include a preformed canister into which a glass fiber structure (2) as mounting mat wrapped catalyst support structure is inserted. The housing (1) might also include an inlet at one end and an outlet (not shown) at its opposite end. The inlet and outlet are suitably formed at their outer ends whereby they may be secured to conduits in the exhaust system of an internal combustion engine. The device contains a fragile catalyst support structure (3), such as a frangible ceramic monolith (3), which is supported and restrained within housing (1) by a glass fiber structure (2) to be further described. Monolith (3) includes a plurality of gas pervious passages that extend axially from its inlet end surface at one end to its outlet end surface at its opposite end. Monolith (3) may be constructed of any suitable refractory metal or ceramic material in any known manner and configuration. Monoliths are typically oval or round in cross sectional configuration, but other shapes are also possible.

The glass fiber structure (2), filled in the gap between the monolith and the housing, provides thermal insulation, acoustic insulation and mechanical support to the fragile structure, protecting the fragile structure from mechanical shock. The glass fiber structure (2) is preferably a non-intumescent mat, with no intumescent materials such as vermiculite or graphite involved, as well as no fibers having a diameter smaller than 5 µm.

To increase the thermal stability of the glass fiber structure (2), the boric oxide containing thermal stable high silica glass fibers were used to make it. In fact, this boric oxide containing thermal stable high silica glass fibers are preferably excellent in its thermal stability, as discussed below. The glass fiber structure (2) may or may not include a binder. When a binder is used, the components are mixed to form a mixture or slurry. The slurry of fibers and binder is then formed into a mat structure and the binder is removed, thereby providing a mounting mat containing substantially only the boric oxide containing thermal stable high silica glass fibers. The binders used are typically organic binders, which can be eventually be burned out of the mounting mat, leaving only the glass fibers as the supporting mat for mounting the fragile structure.

The glass fiber structure (2), e.g. represented by a supporting mat, containing the fibers, can be prepared by any known techniques commonly used in the preparation of supporting mats. US 3,458,329 discloses a papermaking process. First a slurry including the fibers and the binder is prepared, then place the slurry onto a papermaking machine to be formed into a ply of fiber containing paper, finally they are dried in ovens.

In other embodiments, conventional means such as dry air laying can also be used to make the glass fiber structure (2). To improve the structural integrity, the resultant mat can therefore be dry needled, as is commonly known in the art, to densify the mat and increase its strength. When using dry air layering technique, the glass fiber structure (2) may be alternatively processed by adding a binder to form a discontinuous fiber composite. This method of preparing the mat can aid in maintaining fiber length by reducing breakage.

To further increase the density of the glass fiber structure (2), they should preferably undergo further densification by any manner known in the art to provide a higher density. For instance, needle punching the fibers so as to intertwine and entangle them. Additionally or alternatively, hydro-entangling methods may be used. Another alternative is to press the fibers into a mat form by rolling them through press rollers. The length of the glass fiber structure (2) can e.g. be 0.5-100m, and the width can be 20 cm to 200 cm.

Any of these methods of densification or a combination of these methods can be readily used to obtain a mounting mat of the correct and desired form. The area weight is advantageously in the range of 400-3500 g/cm², with respect to the thickness of 0.2 cm to 20.0 cm.

In addition to optimize the ratio for the holding pressure and the canning pressure, the glass fiber structure (2) should also provide higher thermal stability to meet current industry requirements, as noted previously. In other words, the glass fibers, used to make the glass fiber structure (2), should equally possess improved thermal stability. The glass fiber provided by the invention is boric oxide containing, thermal stable, shows low crystallization tendency, is non-hazardous to humans and environment and contains large amounts of glass. Low crystallization tendency means that the glass fiber can keeps the amorphous nature after 15min to 180min heat treating at temperatures not lower than 1250 °C, preferably not lower than 1350 °C, most preferably not lower than 1400°C.

Aiming to solve the root cause of the silica phase transfer, doping atoms are adopted to hinder the amorphous silica glass transferring into cristobalite or other crystalline phases. The atom doping level also should be very well controlled. Different doping atoms and doping percentage can result in different thermal stability, thus different crystallization tendency, meaning different operating temperature for the exhaust gas treatment device. The sintering temperature in the sintering process, aiming to remove the pores, can also be influenced.

It turned out during experiments that as a basic matrix, the SiO₂ content should be controlled to higher level and should be at minimum 80% and to maximum 96%. The SiO₂ content determines the chemical durability, thermal stability and mechanical property. On the one hand, if the Si02 content is lower than 80%, the glass fiber usually can not survive at the operating temperatures higher than 800 °C for longer time, not to say 1000 °C particularly 1250 °C. On the other hand, regarding the property modification, there always should be some percentage left for doping other compositions, meaning the maximum level of SiO₂ should be controlled less than 96 wt%.

The acidic oxide Al₂O₃, as an intermediate, can reduce the crystallization of glasses when the percentage is controlled in a proper level, meaning it should not be too high. Otherwise, a too high content of Al₂O₃ will increase the viscosity of the mother glass to make processing more difficult. Furthermore, too high Al₂O₃ content could also bring harm to the basic resistance. An advantageous range for Al₂O₃ spans from 6 % to 15%, and most advantageously from 6% to 11%.

Good thermal stability remained at temperatures above 1400 °C has been significantly improved by doping proper percentage of B₂O₃. The improved thermal stability achieved in this invention is a major advantage compared with the example described in US 2010298110 A. B₂O₃ will form a [BO₄] tetrahedron to build up the network with Si-O bond, which enhance the network of the SiO₂ matrix and reduce the crystallization tendency. The proper percentage is about > 0% - 10%, preferably about > 0% - 5% B₂O₃.

As for the alkali oxide of Li₂O, Na₂O and K₂O, which are intrinsically softening the glass stability, the inventors found out that their content should be controlled and that their individual content in the leached glass fiber composition should be preferably at most than 1%. Other components MgO, CaO, SrO, BaO, P₂O₅, Fe₂O₃, ZrO₂ and F- also should preferably also be strictly controlled and their individual content in the leached glass fiber composition is preferably at most 5%, preferably at most 3%. Certain amounts of the impurity dopants inside the glass can make the atoms difficult to be rearranged into a crystalline lattice, thus to block the phase transfer and reduce the crystallization tendency. Too high content of them will make the glass soften easily, and then lower the thermal stability and the mechanical property.

Especially after heat treatment for 15 min to 180 min, the glass fiber according to this invention, after heat treatment, can achieve a thermal stability that leads to the effect that the glass fibers are amorphous at temperatures higher than 1250 °C, preferably higher than 1350 °C, most preferably higher than 1400 °C, achieving advantages to the final products used in such high temperatures.

The glass fibers used for the testing were obtained by acid leaching of different sets of mother glass with the composition ranges 55% - 80 % SiO₂, 6% - 20% Al₂O₃, 0.1% - 5% B₂O₃, 0% - 40% R₂O, 0 - 5% R. R₂O and R stand for the components as defined in the foregoing sections.

In the sample production, the process as described in the referring preceding sections was applied. The process step of acid leaching was especially well controlled. Otherwise, the final composition, structure and property of the leached glass fiber will be highly influenced. All unnecessary impurities wrapped in the leached pores or absorbed on the glass surface should be cleaned after the leaching process.

The fibers obtained by the drawing of the mother glass melt possess a diameter in the range of ≥ 5 µm. Of course smaller diameters are possible, but undesired because they are assumed to have negative effects on health issued and the environment. Advantageous ranges of fiber diameters drawn from the mother glass, which then also represent the diameters of the leached glass fibers used to produce the glass fiber structure, are 5 - 20 µm, 6 - 15 µm, 7 - 12 µm and 7 - ≤ 10 µm. The fibers had a length in the range of 10 - 1000 cm. The fibers obtaines were essentially shot free (free of particles in a non fiber shape esp. outside the above mentioned diameter values.

The acid treatment in the leaching step could be performed with any acid that can provide protons, in particular one of inorganic acid like hydrochloric acid, sulfuric acid, nitric acid or phosphoric acid, and mixture of thereof; or one of organic acid like acetic acid, formic acid or oxalic acid, and mixture of thereof. The acid leaching is performed at a temperature of about 25 - 100 °C, preferably higher than 80 °C, and for a period of 0.5 - 50 hours, preferably 0.5 - 5.5hours.

In the rinsing in step, the use of de-ionized water as rinsing medium showed best results and the rinsing was performed until the residual chemical is completely cleaned.

The optional heat treating in step was beneficially performed at a temperature of 70 - 1200 °C and for a period of 0.1 - 50 hours.

The most important step to transfer the mother glass into the final glass product is the acid leaching process. In this step, the alkali metal ions designed in the mother glass will be extracted out by H+ to the acid solution. As a result, the alkali metal ions will be replaced almost completely. And, other compositions like Al₂O₃, B₂O₃, MgO, CaO, SrO, BaO, P₂O₅, Fe₂O₃, ZrO₂ and F will be remained in the SiO₂ matrix of mother glass. When the bigger atom of alkali metal is replaced by the much smaller protons, pores together with physically and chemically bonded water on the surface will also be created. Later on the bonded water will be removed by sintering process, leaving new Si-O-Si.

The high silica B₂O₃ containing crystallization stable fibers can be used for many other applications. Specifically, a lot of fiber structures including said fibers, such as yarns, mats etc., could be manufactured for a large variety of applications especially where high operation temperatures are involved, such as the exhausting system in the automobile and vehicle industry, filter in the metallurgy or construction in industrial furnace, burn proof and filtering materials usually under roomtemperature conditions in architecture, transportation and medical applications (e.g. air filtering ) , always esp. where exposure to environment a/o humans, animals or nature (intended or not intended) is likely or possible, but not limited to these fields.

With following examples, the invention will be more detailed described, but not limit the range of it.

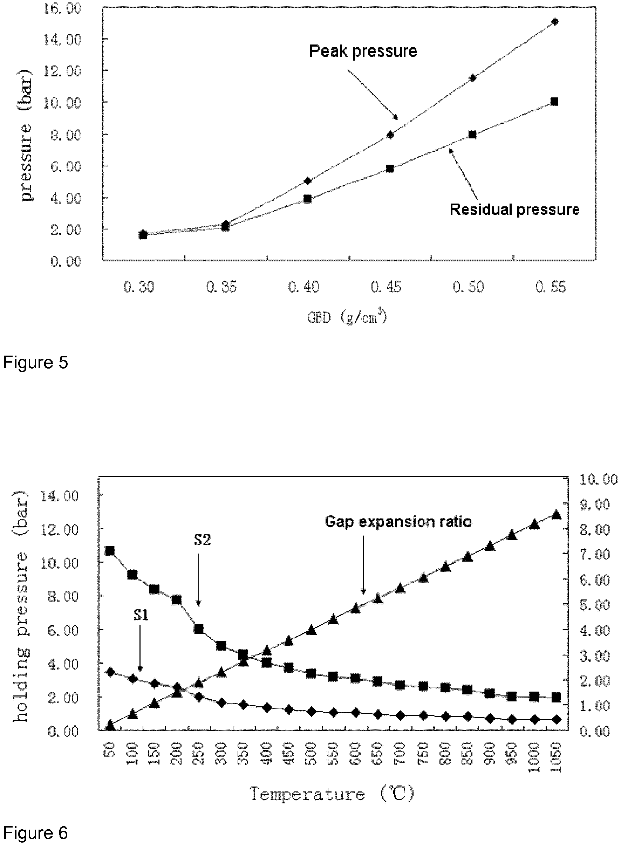

Figure 6 shows the holding pressure test on the mats at temperatures from 50 °C to 1050 °C.

Examples were produced to demonstrate the effect of the boric oxide containing thermal stable high silica glass fiber. As a person skilled in the art knows, when a product, i.e. fiber, is heavily crystallized under high using temperature, the product can not maintain its mechanical property, i.e. tensile strength, as suitable as it should be. To change the crystallization tendency of the final high silica glass fiber, different function atoms are chosen to modify the mother glass. The atoms, according to their function role in the glass, can be classified into three species: network former (B₂O₃ and P₂O₅), intermediate (Fe₂O₃, MgO, CaO and BaO) and modifier (F, Li₂O, Na₂O and K₂O). All the examples below are supposed to demonstrate how the high silica glass fiber is obtained.

The composition of the mother glass and the glass after acid leaching is shown in Table 1.

**Table 1**

| **sample** | | **composition (wt%)** | | | | |
|---|---|---|---|---|---|---|
| | | **SiO₂** | **Al₂O₃** | **Na₂O** | **B₂O₃** | **P₂O₅** |
| **S0** | mother glass | 68 | 6.8 | 25.2 | | |
| | fiber after acid leaching | 90.5 | 9 | 0.5 | | |
| **S1** | mother glass | 67 | 6.8 | 25.2 | 1 | |
| | fiber after acid leaching | 89.22 | 8.2 | 0.72 | 1.59 | |
| **S2** | mother glass | 66 | 6.8 | 25.2 | 2 | |
| | fiber after acid leaching | 89.86 | 8.3 | 0.25 | 1.86 | |
| **S3** | mother glass | 66 | 6.8 | 25.2 | 1 | 1 |
| | fiber after acid leaching | 88.39 | 8.8 | 0.11 | 1.6 | 1.1 |

Three mother glasses, S1, S2 and S3, are prepared in a crucible. The compositions of mother glass are designed in the aforesaid range. The raw powders of the mother glass were heated to be liquefied in a bushing. The glass filaments discharging from the orifices at the bottom side of the bushing are taken up by a rotating drum, drawn by a winder axially to the drum, and wound up. These spools are subsequently thoroughly acid leached with 20% hydrochloric acid for about 5 hours at a temperature of at least 30 °C (more preferably 80 °C). Subsequently, the salt produced by the reaction and the residual acid are removed from the fibers by several rinsing operations with water. The spools are allowed to drain, and subsequently dried for 24 h with hot air of at least 70 °C until the weight remains constant. After this process, the boric oxide containing fiber is obtained; see the compositions after acid leaching in Table1.

As a comparison, the mother glass and leached glass fiber disclosed in US 2010298110 A, were also prepared as sample S0 with the composition listed in Table 1. Other processing steps are the same to convert the mother glass into acid leached glass fiber. The final glass comprises the composition also listed in Table 1.

The leached fiber according to samples of S1 (1 % B₂O₃), S2 (2% B₂O₃) and the comparison sample S0 (no B₂O₃) are chosen to do the XRD testing, showed in Figure 2, Figure 3 and Figure 4.

Before the XRD analysis, the samples are heat treated for 30 min at temperatures of 1100 °C, 1275 °C and 1400 °C, respectively, in order to evaluate their stability at those operating temperatures. After heat treatment, the samples are immediately taken out from the furnace and cooled to the room temperature naturally. Then, the heat treated powders are taken to do the XRD analysis.

Figure 2 shows XRD characterization on examples after heat treating at 1100 °C for 30 min. This Figure demonstrates that after 1100 °C for 30 min heat treating, no crystallization has been detected by XRD in all the samples S0, S1 and S2. It is obvious that no matter the comparison sample or the B₂O₃ containing samples are all thermal stable till 1100 °C heat treating.

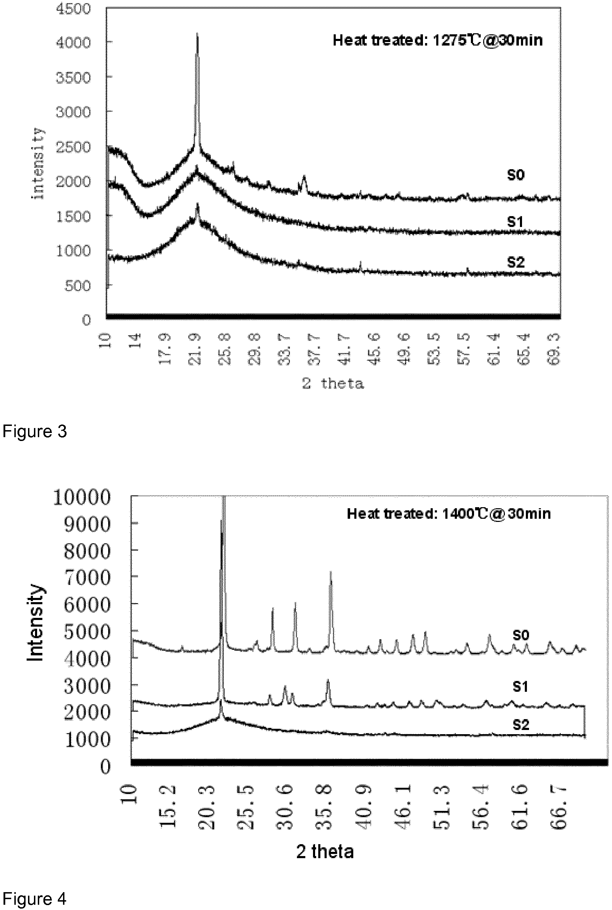

Figure 3 shows XRD characterization on examples after heat treating at 1275 °C for 30 min. As can be seen in this Figure, the crystallization performance at this temperature is dramatically different. The comparison sample S0 has now three phases inside the sample: silica glass, α-cristobalite, and little β-cristobalite phases, meaning some silica have already been transferred into crystal phase. Whereas, the B₂O₃ containing samples S1 and S2 still remain as amorphous glass fiber, no crystal phase are detected, showing no silica transferred into crystal phase. Therefore, the introduction of B₂O₃ leads to a very significant improvement the thermal stability to the leached glass fiber.

Figure 4 shows XRD characterization on examples after heat treating at 1400 °C for 30 min. At this operation temperature, the crystallization tendency are increase with a reduction of the B₂O₃ content and therefore from sample S2 to S1 and further to S0, the phase transfer is getting severely. This confirms again that B₂O₃ including sample have a better thermal stability, and a higher B₂O₃ content performs better than a lower one.

As next step the canning performance of the fibers was investigated. The fibers of example S1 are chosen to make fiber mats by a papermaking processing. First a slurry including the fibers and the binder was produced, then the slurry was placed onto a papermaking machine to be formed into a ply of fiber containing paper, finally they were dried in ovens. To further increase the density of the mat, needle punching and press rolling were adopted.

The basis weight of the mat made in this example was 1600 g/m², with a thickness of 9 mm. Then, the mat was canned between the fragile structure and the metal shell. During the canning process, a thin film sensor was wrapped around the filter, which in turn was covered by the mat material and put into the canning process. The pressure distribution during canning was recorded in real time, allowing the measurement of both, peak and residual pressure.

Figure 5 shows the room temperature compression behavior at different GBD when canning at room temperature. The residual pressure shown corresponds to the pressure measure after 5 min subsequent to the canning. It can be seen that when the GBD of the produced mat increases from 0.30 g/cm³ to 0.55 g/cm³, the peak pressure and residual pressure increase from 1.7 bar to 15.1 bar and from 1.6 bar to 10.0 bar, respectively. The ratio between the peak pressure to residual pressure at any given GBD is from 1.06 to 1.51.

In the shown GBD range from 0.30 g/cm³ to 0.55 g/cm³, the ratio between the maximum peak pressure (15.10 bar) to the minimum peak pressure (1.70 bar) is 8.88, and the ratio between maximum residual pressure (10.00 bar) to the minimum residual pressure (1.60 bar) is 6.25.

When canning the fragile structure at ambient temperatures, the gap between the shell and substrate are under stable conditions. Once the converter is exposed to the hot exhaust gas, the shell (usually with higher coefficient of thermal expansion) begins to expand more rapidly and greater than the fragile structure (usually with lower coefficient of thermal expansion), resulting in a "gap expansion". Obviously, the gap will increase as the temperature is increasing. If improperly designed, the system will lose the holding pressure. Therefore, the glass fiber structure must be able to function and absorb the increased gap and provide sufficient pressure to maintain converter integrity. As described previously, a ratio between the maximum holding pressure and minimum holding pressure and concrete holding pressure value are both defined to avoid the risk of breaking the fragile structure. The example here is used to verify the design principle.

The following test is designed to simulate the mechanical cycling associated with expansion and contraction of the shell. The fibers of example S1 and S2 are chosen to make fiber mats by a papermaking processing. First a slurry including the fibers and the binder was prepared, then the slurry was place onto a papermaking machine to be formed into a ply of fiber containing paper, finally this intermediate was dried in ovens. To further increase the density of the mat, needle punching and press rolling were adopted.

Two pieces of sample, with the same dimension of 2.5 inch by 2.5 inch, are prepared from the mats, and placed between two movable heaters at a GBD of 0.40 g/cm³ for S1 and 0.55 g/cm³ for S2. The heaters were heated to a temperature of 1050 °C to simulate the working temperature and gap expansion in the converter. The testing records of the holding pressure and gap expansion are plotted in Figure 6, which shows the measured holding pressure at 1050 °C.

It can be seen that, when the heating temperature is increased from 50 °C to 1050 °C and gap expansion ratio increases from 0.25% to 8.58%, the holding pressure of the mat according to samples S1 and S2 varies from 3.51 bar as maximum holding pressure to 0.63 bar as minimum holding pressure, and from 10.62 bar as maximum holding pressure to 1.90 bar as minimum holding pressure, respectively. And, most importantly, the ratios between the maximum holding pressure to the minimum holding pressure of both mat, 5.57 for S1 and 5.59 for S2, falls into the range of ≥ 0.1 and ≤ 10 at the operating temperature range of 50 °C to 1050 °C.

Compared with the prior art, the exhaust gas treatment system according to the invention provides a set of working parameters which enables an efficient manufacturing of the devices and secures the reliable operation of the device over an adequate period of time. This result is promoted by the boron oxide containing leached fiber with improved stability. Therefore the number of defective products in the manufacturing and operation are significantly decreased and thus saves energy, raw materials and waste. Furthermore, the performance of the exhaust gas treatment device is kept constant during its operational life and the exhaust gases can be efficiently cleaned by an undamaged catalyst. This helps to improve the health and environmental conditions.

## Claims

1. Exhaust gases treatment device comprising
a housing, a fragile structure mounted within said housing, a glass fiber structure disposed in a gap between said housing and the fragile structure, the glass fiber structure having a gap bulk density and is providing a maximum and a minimum holding pressure to the fragile structure depending on the operation temperature of the exhaust gases treatment device, **characterized by**
the glass fiber structure exerting a ratio between the maximum holding pressure and minimum holding pressure from ≥ 0.1 to ≤ 65 at the operating temperature range from 50 °C to 1050 °C and the maximum holding pressure is ≤ 20 bar.

2. Exhaust gases treatment device according to claim 1,
**characterized by**
the glass fiber structure exerting a ratio between the maximum holding pressure and minimum holding pressure from ≥ 0.1 to ≤ 35 at the operating temperature range from 50 °C to 800 °C and ≥ 0.1 to ≤ 10 at the operating temperature range from 50 °C to 400 °C and the maximum holding pressure is ≤ 15 bar.

3. Exhaust gases treatment device according to at least one of the preceding claims,
**characterized by**
the glass fiber structure is a mat with no or at least almost no thermal expansion.

4. Exhaust gases treatment device according to at least one of the preceding claims,
**characterized by**
the glass fiber structure mounted in the housing having a gap bulk density of ≥ 0.1 g/cm³ to ≤ 0.8 g/cm³.

5. Exhaust gases treatment device according to claim 4,
**characterized by**
the glass fiber structure exerting a ratio between the peak maximum pressure at the maximum gap bulk density to the peak maximum pressure at the minimum gap bulk density of ≥ 0.1 to ≤ 15 and a ratio of the residual maximum pressure at the maximum gap bulk density to the residual maximum pressure at the minimum gap bulk density of ≥ 0.1 to ≤ 15.

6. Exhaust gases treatment device according to at least one of the preceding claims,
**characterized by**
the glass fibers comprised in the glass fiber structure comprises the following components (in weight% on oxide basis):
| | |
|---|---|
| SiO₂ | 80 - 96 |
| Al₂O₃ | 3.9 - 20 |
| B₂O₃ | 0.1 - 10 |
| Li₂O | 0 - 1 |
| K₂O | 0 - 1 |
| MgO | 0 - 5 |
| CaO | 0 - 5 |
| SrO | 0 - 5 |
| BaO | 0 - 5 |
| P₂O₅ | 0 - 5 |
| Fe₂O₃ | 0 - 5 |
| ZrO₂ | 0 - 5 |
| F | 0 - 5 |
| ZnO | 0 - 5 |
| TiO₂ | 0 - 5 |

7. Exhaust gases treatment device according to claim 6,
**characterized by**
the glass fibers having a crystallization temperature ≥ 1250 °C and the following component conditions (in weight% on oxide basis) are met:
Σ Al₂O₃+ B₂O₃ 6.1 - 20
Σ SiO₂ + B₂O₃ 80.1 - 96
Σ B₂O₃ + P₂O₅ + Li₂O + Na₂O + K₂O + MgO + CaO + SrO + BaO + F + Fe₂O₃ + ZrO₂+ TiO₂ > 1.5

8. Exhaust gases treatment device according to claim 6 and/or 7, **characterized by**
the glass fibers comprising (in weight% on oxide basis):
B₂O₃ ≥ 0.3 - 5

9. Exhaust gases treatment device according to at least one of the preceding claims,
**characterized by**
the glass fibers comprised in the glass fiber structure having a diameter ≥ 5 to ≤ 20 µm.

10. Process for making an exhaust gases treatment device according to at least one of the preceding claims including the process steps providing a housing, providing a fragile structure, providing a glass fiber structure and mounting the fragile structure within the housing by disposing a glass fiber structure within a gap between the housing and the fragile structure, **characterized by** the process steps
melting a mother glass comprising (in weight% on oxide basis):
| | |
|---|---|
| SiO₂ | 55 - 80 |
| Al₂O₃ | 6 - 20 |
| B₂O₃ | 0.1 - 5 |
| R₂O | 0 - 40 |
| R | 0 - 5 |
with R₂O being one or a mixture of any of Li₂O and/or Na₂O and/or K₂O and R being one or a mixture of MgO and/or CaO and/or SrO and/or BaO and/or P₂O₅ and/or Fe₂O₃ and/or ZrO₂ and/or F,
forming fibers from the mother glass,
acid or basic extraction of the aforesaid fibers,
rinsing the leached fibers with removal of acid and/or basic and/or salt residues,
forming the glass fiber structure with the rinsed fibers.

11. Process according to claim 9,
**characterized by**
heat treating the rinsed fibers prior to forming the fiber structure.
